# EUROPEAN PATENT SPECIFICATION

(11) **EP 0 604 274 B1**
(45) Date of publication and mention of the grant of the patent: **02.11.2000**
(21) Application number: 93403052.9
(22) Date of filing: 16.12.1993
(51) Int. Cl.: H04M 1/00

(54) **Communication apparatus having audio response function**
Kommunikationsgerät mit Audio-Antwortfunktion
Appareil de communication à fonction de audio-réponse

(30) Priority: 22.12.1992 JP 34249692
(43) Date of publication of application: 29.06.1994
(73) Proprietor: CANON KABUSHIKI KAISHA, Tokyo (JP)
(72) Inventor: Morohara, Takayuki, c/o Cannon Kabushiki Kaisha, Tokyo (JP); Uehara, Shingo, c/o Cannon Kabushiki Kaisha, Tokyo (JP)
(74) Representative: Rinuy, Santarelli

(56) References cited:
- US-A- 4 866 755
- US-A- 4 916 730
- US-A- 4 958 366

## Description

The present invention relates to a communication apparatus having audio response function, to transmit a prestored audio response message at the time of call reception.

### Related Background Art

Document US-A-4 958 366 discloses a communication apparatus having audio response function for transmitting a voice message of one-kind language in response to the call reception. Furthermore, the language of the voice message transmitted from the apparatus can be selected by the operator with operation of the dial keys 1 to 9 or the like.

Document US-A-4 866 755 discloses a communication apparatus having audio response function for transmitting a voice message of one-kind language in response to the call reception. Moreover, the voice from the calling-party operator is analysed to discriminate the language capable of being understood by the calling-party operator, and the voice message is transmitted in the discriminated language.

### Summary of the invention

It is an object of the invention to allow a calling party to certainly understand the meaning of an audio response message.

Another object of the invention is to allow a partner who calls a telephone to promptly understand an audio response message in accordance with the result of discrimination regarding which language is used by many persons.

An object of the present invention is a communication apparatus automatically sending a prestored message to a communication line in response to a calling signal from the communication line, characterised in that it comprises:
memory means for storing audio messages of a plurality of kinds of languages; and
auto-sending means, responsive to the calling signal, for sequentially transmitting the audio messages of said plurality of kinds of languages stored in said memory means.

Another object of the present invention is a communication method for automatically sending a pre-stored message to a communication line in response to a calling signal from the communication line, characterised in that it comprises:
a memory step of storing audio messages of a plurality of kinds of languages; and
an auto-sending step, responsive to the calling signal, of sequentially transmitting the audio messages of said plurality of kinds of languages stored in said memory step.

The above and other objects and features of the present invention will become apparent from the following detailed description and the appended claims with reference to the accompanying drawings.

### BRIEF DESCRIPTION OF THE DRAWINGS

Fig. 1 is a block diagram showing a construction of communication apparatus of an embodiment;
Fig. 2 is a flowchart showing an inputting operation of the communication apparatus of the embodiment;
Fig. 3 is a flowchart showing an outputting operation of the communication apparatus of the embodiment; and
Fig. 4 is a diagram showing an example of the operation according to the embodiment.

### DETAILED DESCRIPTION OF THE PREFERRED EMBODIMENT

An embodiment of the invention will be described in detail hereinbelow with reference to the drawings.

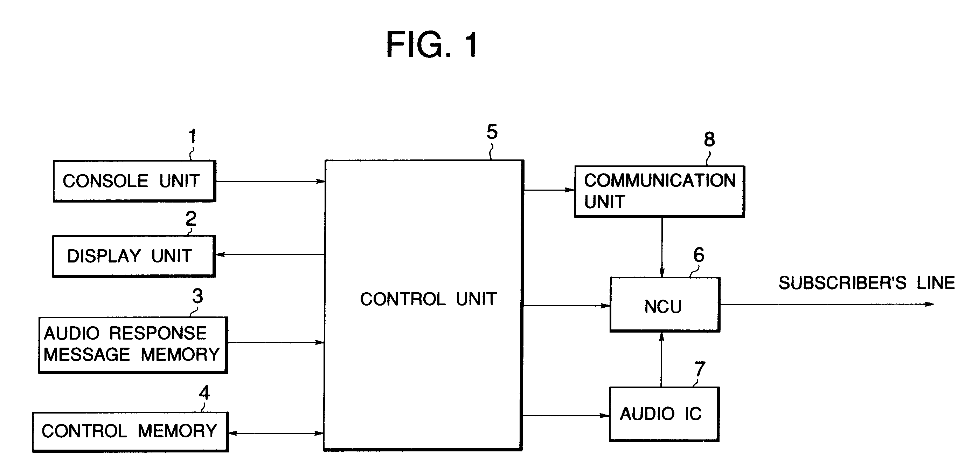

Fig. 1 is a block diagram showing a fundamental construction of a communication apparatus of the embodiment.

In Fig. 1, reference numeral 1 denotes a console unit having various kinds of keys such as one-touch key, ten-key, function key, and the like. The operator selects a language of a message of an audio response (OGM) by operating a desired key of the console unit 1.

Reference numeral 2 denotes a display unit to display various kinds of information or a state of the apparatus by a liquid crystal display (LCD), a light emitting diode (LED), or the like. A selecting (inputting) method of the language of the audio response message is displayed.

Reference numeral 3 denotes a memory in which fixed audio response messages having previously been preserved (stored). Messages indicative of the same meaning of a plurality of languages have been stored in the memory 3.

Reference numeral 4 denotes a control memory to store the order of transmission of the languages of the audio response messages.

Reference numeral 5 denotes a control unit to control the whole apparatus. The control unit 5 is constructed by a microcomputer system comprising a microcomputer, a ROM, a RAM, and the like.

Reference numeral 6 denotes a network control unit (NCU) to perform a capture, a release, or the like of a line.

Reference numeral 7 denotes an audio IC for transmitting the message data read out from the audio response message memory 3 to the line as an audio signal.

Reference numeral 8 denotes a communication unit. In the case where the communication apparatus of the embodiment is an answering telephone, a handset and the like are provided for a communication unit 8 in order to perform a speech communication with a recording unit to record the message from a partner and they are controlled by the control unit 5. In the case where the communication apparatus of the embodiment is a facsimile apparatus, a reader unit, a printer unit, a modem, and the like are provided for the communication unit 8 and they are controlled by the control unit 5. Further, the control unit 5 executes encoding and decoding processes of image data and a facsimile communication control.

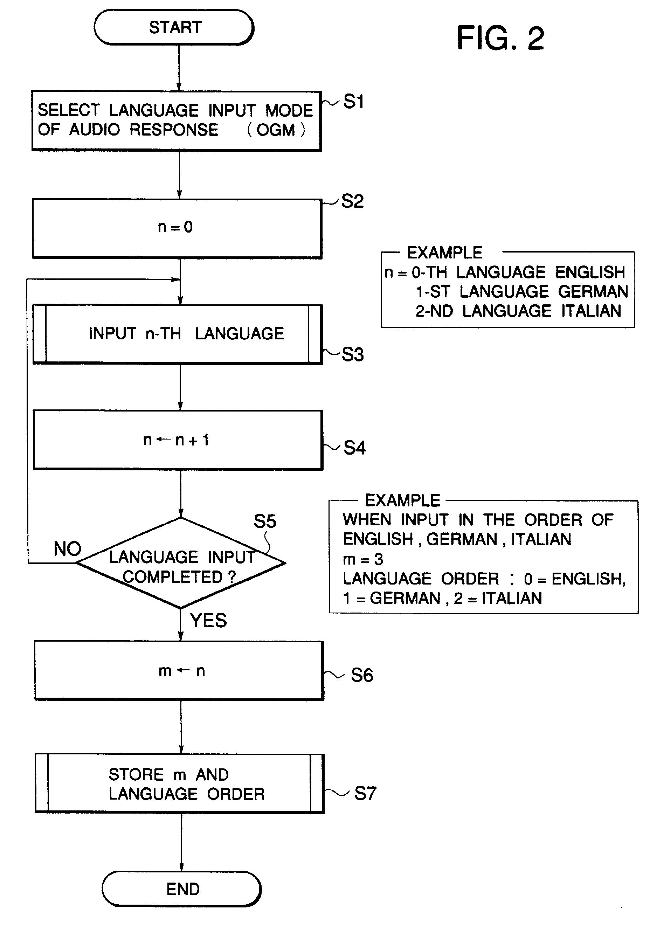

Fig. 2 is a flowchart showing the control operation of the control unit 5 when the order of the languages of audio response messages which are transmitted is registered.

The registering operation of the order of the languages of the audio response messages which are transmitted will now be described in accordance with the flow of Fig. 2.

First, in step S1, a mode to register the order of the languages of the audio response messages which are transmitted is selected by the function key of the console unit 1. When the mode is selected by the operator, a parameter (n) is set to 0 in step S2. The parameter (n) indicates the order of the language of an OGM message which is transmitted. In step S3, a display to instruct the operator to input the language corresponding to the value of the parameter (n) is displayed on the display unit 2. When the operator inputs the corresponding language by the console unit 1, in step S3, the information of the language corresponding to the value of (n) is stored into the control memory 4. The value of (n) is increased by "1" in step S4.

In step S5, a check is now made to see if the operator has executed the operation to finish the input of the language or not. If NO, the processing routine is returned to step S3. If YES, the value of (n) at that time point is stored into a parameter (m) in step S6. The parameter (m) indicates the number of registered languages. In step S7, the value of the parameter (m) is stored into the control memory 4 together with the language order. For example, when it is now assumed that the 0th language (n = 0) is set to English and the first language (n = 1) is set to German and the second language (n = 2) is set to Italian, the information of (m = 3, language order: 0 = English, 1 = German, 2 = Italian) is stored into the control memory 4.

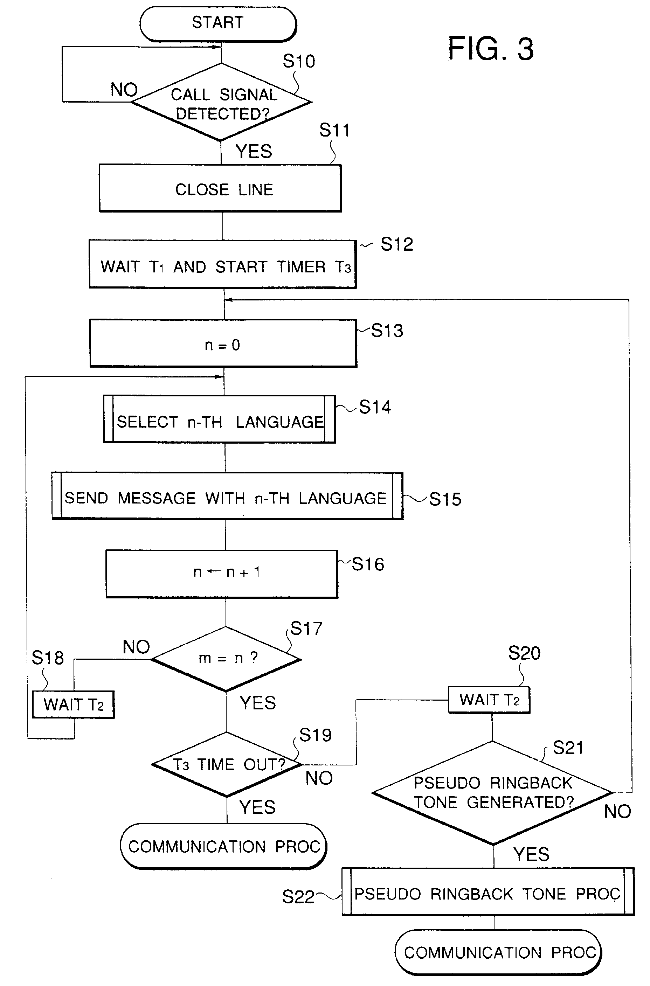

Fig. 3 is a flowchart showing the control operation of the control unit 5 when the audio response message is generated.

First, when a call signal from the line is detected in step S10, the line is captured in step S11. The apparatus waits for T₁ time until the state of the line becomes stable and, after that, a minimum transmission time timer T₃ of the audio response is started (step S12). The audio response message is transmitted in steps S13 to S21.

In step S13, the value of the parameter (n) is set to 0. In step S14, the language corresponding to the value of (n) is read out from the control memory 4. An OGM message in the audio response message memory 3 is selected in accordance with the language information. In step S15, the selected OGM message is supplied to the audio IC 7 and transmitted to the line of the audio response message. After completion of the transmission of the audio response message, the value of (n) is increased by "1" in step S16. A check is made in step S17 to see if the values of (m) and (n) are equal or not. When they differ, step S18 follows and the apparatus waits for a predetermined time T₂. After that, the processing routine is returned to step S14 and the audio response message of the next language is transmitted. When the values of (m) and (n) are equal in step S17, a check is made in step S19 to see if the minimum transmission time timer T₃ of the audio response has timed out or not.

If YES in step S19, a communication process (recording of the message from the partner side, facsimile communication, or the like) in step S22 is executed. If NO in step S19, the apparatus waits for the T₂ time in step S20. After that, a check is made to see if a process to generate a pseudo ringback tone has been selected or not in step S21. In the pseudo ringback tone process, a pseudo ringback tone indicating that the operator is at present calling is transmitted to the partner side at a predetermined time interval (one or two seconds). When the pseudo ringback tone process is not selected in step S21, the processing routine is again returned to step S13 and the audio response message of a different language in the setting order is transmitted. When the pseudo ringback tone process is selected, the pseudo-ringback tone process is executed for a predetermined time in step S22. After that, a communication process similar to step S22 is executed.

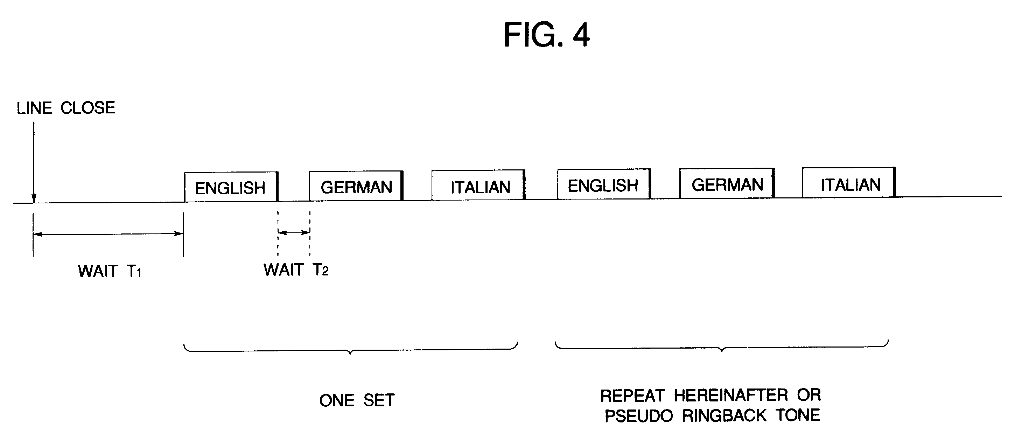

Fig. 4 shows an example in the case where the OGM message in English is first transmitted, the OGM message in German is subsequently transmitted, and the OGM message in Italian is finally transmitted.

## Claims

1. A communication apparatus automatically sending a prestored message (S15) to a communication line in response to a calling signal (S10) from the communication line, characterised in that it comprises:
memory means (3) for storing audio messages of a plurality of kinds of languages; and
auto-sending means (5, S14 to S18), responsive to the calling signal, for sequentially transmitting the audio messages of said plurality of kinds of languages stored in said memory means.

2. An apparatus according to claim 1, further comprising setting means (5, S3 to S5) for setting the order of said plurality of kinds of languages,
wherein said auto-sending means sequentially sends the audio messages of said plurality of kinds of languages stored in said memory means in accordance with the order set by said setting means.

3. An apparatus according to claim 2, further comprising control means (5, S17) for controlling said auto-sending means in accordance with whether or not the audio messages of the number of languages whose order had been set by said setting means have been sent.

4. An apparatus according to any one of claims 1 to 3, wherein said auto-sending means repetitively sends the audio messages of said plurality of kinds of languages stored in said memory means.

5. An apparatus according to any one of claims 1 to 4, wherein said auto-sending means sends the audio messages of said plurality of kinds of languages stored in said memory means and, after that, sends a pseudo ring-back tone signal (S22).

6. An apparatus according to any one of claims 1 to 5, further comprising communicating means (8) for performing a communication after the audio messages were sent by said auto-sending means.

7. An apparatus according to claim 6, wherein said communicating means (8) is adapted to perform a facsimile communication.

8. An apparatus according to either one of claims 6 or 7, wherein said communicating means (8) includes an answering telephone unit.

9. An apparatus according to any one of claims 1 to 8, further comprising control means (5, S19) for controlling said auto-sending means in accordance with whether or not the audio messages have been sent for a predetermined time.

10. An apparatus according to any one of claims 1 to 9, wherein said audio messages of said plurality of kinds of languages denote the same content.

11. A communication method for automatically sending a pre-stored message (S15) to a communication line in response to a calling signal from the communication line, characterised in that it comprises:
a memory step (S1 to S7) of storing audio messages of a plurality of kinds of languages; and
an auto-sending step (S14 to S18), responsive to the calling signal, of sequentially transmitting the audio messages of said plurality of kinds of languages stored in said memory step.

12. A method according to claim 11 further comprising a setting step (S3 to S5) for setting the order of said plurality of kinds of languages,
wherein said auto-sending step sequentially sends the audio messages of said plurality of kinds of languages stored in said memory step in accordance with the order set in said setting step.

13. A method according to claim 12, further comprising a control step (S17) of controlling said auto-sending step in accordance with whether or not the audio messages of the number of languages whose order had been set in said setting step have been sent.

14. A method according to any one of claims 11 to 13, wherein said auto-sending step repetitively sends the audio messages of said plurality of kinds of languages stored in said memory step.

15. A method according to any one of claims 11 to 14, wherein said auto-sending step sends the audio messages of said plurality of kinds of languages stored in said memory step and, after that, sends a pseudo ring-back tone signal (S22).

16. A method according to any one of claims 11 to 15, further comprising a communicating step of performing a communication after the audio messages were sent in said auto-sending step.

17. A method according to claim 16, wherein said communicating step performs a facsimile communication.

18. A method according to either one of claims 16 or 17, wherein said communicating step includes an answering operation of an answering telephone unit.

19. A method according to any one of claims 11 to 18, further comprising a control step of controlling said auto-sending step in accordance with whether or not the audio messages have been sent for a predetermined time.

20. A method according to any one of claims 11 to 19, wherein said audio messages of said plurality of kinds of languages denote the same content.

## Patentansprüche

1. Kommunikationsgerät, das als Antwort auf ein Anrufsignal (S10) von einer Übertragungsleitung automatisch eine vorgespeicherte Nachricht an die Übertragungsleitung sendet (S15),
**gekennzeichnet durch**
eine Speichereinrichtung (3) zur Speicherung von Audionachrichten einer Vielzahl von Spracharten, und
eine automatische Sendeeinrichtung (5, S14 bis S18), die auf das Anrufsignal antwortet, zur sequentiellen Übertragung der in der Speichereinrichtung gespeicherten Audionachrichten der Vielzahl von Spracharten.

2. Gerät nach Anspruch 1, ferner mit einer Einstelleinrichtung (5, S3 bis S5) zur Einstellung der Reihenfolge der Vielzahl von Spracharten,
wobei die automatische Sendeeinrichtung die in der Speichereinrichtung gespeicherten Audionachrichten der Vielzahl von Spracharten entsprechend der durch die Einstelleinrichtung eingestellten Reihenfolge sequentiell sendet.

3. Gerät nach Anspruch 2, ferner mit einer Steuereinrichtung (5, S17) zur Steuerung der automatischen Sendeeinrichtung in Übereinstimmung damit, ob die Audionachrichten der Anzahl von Sprachen, deren Reihenfolge durch die Einstelleinrichtung eingestellt worden ist, gesendet worden sind oder nicht.

4. Gerät nach einem der Ansprüche 1 bis 3, wobei die automatische Sendeeinrichtung die in der Speichereinrichtung gespeicherten Audionachrichten der Vielzahl von Spracharten wiederholt sendet.

5. Gerät nach einem der Ansprüche 1 bis 4, wobei die automatische Sendeeinrichtung die in der Speichereinrichtung gespeicherten Audionachrichten der Vielzahl von Spracharten sendet und danach ein Pseudo-Freizeichen sendet (S22).

6. Gerät nach einem der Ansprüche 1 bis 5, ferner mit einer Kommunikationseinrichtung (8) zur Durchführung einer Kommunikation nach dem Senden der Audionachrichten durch die automatische Sendeeinrichtung.

7. Gerät nach Anspruch 6, wobei die Kommunikationseinrichtung (8) zur Durchführung einer Faksimilekommunikation angepaßt ist.

8. Gerät nach entweder Anspruch 6 oder 7, wobei die Kommunikationseinrichtung (8) eine Anrufbeantwortereinheit aufweist.

9. Gerät nach einem der Ansprüche 1 bis 8, ferner mit einer Steuereinrichtung (5, S19) zur Steuerung der automatischen Sendeeinrichtung in Übereinstimmung damit, ob die Audionachrichten für eine vorbestimmte Zeit gesendet worden sind oder nicht.

10. Gerät nach einem der Ansprüche 1 bis 9, wobei die Audionachrichten der Vielzahl von Spracharten den gleichen Inhalt bezeichnen.

11. Kommunikationsverfahren zum automatischen Senden einer vorgespeicherten Nachricht (S15) an eine Übertragungsleitung als Antwort auf ein Anrufsignal von der Übertragungsleitung,
**gekennzeichnet durch**
einen Speicherschritt (S1 bis S7) zum Speichern von Audionachrichten einer Vielzahl von Spracharten, und
einen automatischen Sendeschritt (S14 bis S18), der auf das Rufsignal antwortet, zur sequentiellen Übertragung der in dem Speicherschritt gespeicherten Audionachrichten der Vielzahl von Spracharten.

12. Verfahren nach Anspruch 11, ferner mit einem Einstellschritt (S3 bis S5) zum Einstellen der Reihenfolge der Audionachrichten der Vielzahl von Spracharten,
wobei der automatische Sendeschritt die in dem Speicherschritt gespeicherten Audionachrichten der Vielzahl von Spracharten entsprechend der in dem Einstellschritt eingestellten Reihenfolge sequentiell sendet.

13. Verfahren nach Anspruch 12, ferner mit einem Steuerschritt (S17) zum Steuern des automatischen Sendeschritts in Übereinstimmung damit, ob die Audionachrichten der Anzahl von Sprachen, deren Reihenfolge in dem Einstellschritt eingestellt worden ist, gesendet worden sind oder nicht.

14. Verfahren nach einem der Ansprüche 11 bis 13, wobei der automatische Sendeschritt die in dem Speicherschritt gespeicherten Audionachrichten der Vielzahl von Spracharten wiederholt sendet.

15. Verfahren nach einem der Ansprüche 11 bis 14, wobei der automatische Sendeschritt die in dem Speicherschritt gespeicherten Audionachrichten der Vielzahl von Spracharten sendet und danach ein Pseudo-Freizeichen sendet (S22).

16. Verfahren nach einem der Ansprüche 11 bis 15, ferner mit einem Kommunikationsschritt zur Durchführung einer Kommunikation nach dem Senden der Audionachrichten in dem automatischen Sendeschritt.

17. Verfahren nach Anspruch 16, wobei der Kommunikationsschritt eine Faksimilekommunikation durchführt.

18. Verfahren nach Anspruch 16 oder 17, wobei der Kommunikationsschritt eine Anrufbeantwortungsoperation einer Anrufbeantwortereinheit aufweist.

19. Verfahren nach einem der Ansprüche 11 bis 18, ferner mit einem Steuerschritt zur Steuerung des automatischen Sendeschritts in Übereinstimmung damit, ob die Audionachrichten für eine vorbestimmte Zeit gesendet worden sind oder nicht.

20. Verfahren nach einem der Ansprüche 11 bis 19, wobei die Audionachrichten der Vielzahl von Spracharten den gleichen Inhalt bezeichnen.

## Revendications

1. Appareil de communication émettant automatiquement un message pré-enregistré (S15) sur une ligne de communication en réponse à un signal appelant (S10) provenant de la ligne de communication, caractérisé en ce qu'il comprend:
des moyens de mémoire (3) pour enregistrer des messages audio d'une pluralité de sortes de langues; et
des moyens d'auto-émission (5, S14 à S18) réagissant au signal appelant de façon à émettre séquentiellement les messages audio de la pluralité de sortes de langues enregistrés dans les moyens de mémoire.

2. Appareil selon la revendication 1, comprenant en outre des moyens de fixation (5, S3 à S5) pour fixer l'ordre de la pluralité de sortes de langues,
dans lequel les moyens d'auto-émission émettent séquentiellement les messages audio de la pluralité de sortes de langues enregistrés dans les moyens de mémoire conformément à l'ordre fixé par les moyens de fixation.

3. Appareil selon la revendication 2, comprenant en outre des moyens de commande (5, S17) pour commander les moyens d'auto-émission conformément au fait que les messages audio du nombre de langues dont l'ordre a été fixé par les moyens de fixation, ont été émis ou non.

4. Appareil selon l'une quelconque des revendications 1 à 3, dans lequel les moyens d'auto-émission émettent de façon répétitive les messages audio de la pluralité de sortes de langues enregistrés dans les moyens de mémoire.

5. Appareil selon l'une quelconque des revendications 1 à 4, dans lequel les moyens d'auto-émission émettent les messages audio de la pluralité de sortes de langues enregistrés dans les moyens de mémoire, et après ceci, ils émettent un signal de pseudo-tonalité de retour d'appel (S22).

6. Appareil selon l'une quelconque des revendications 1 à 5, comprenant en outre des moyens de communication (8) pour effectuer une communication après que les messages audio ont été émis par les moyens d'auto-émission.

7. Appareil selon la revendication 6, dans lequel les moyens de communication (8) sont adaptés pour effectuer une communication de télécopie.

8. Appareil selon l'une quelconque des revendications 6 ou 7, dans lequel les moyens de communication (8) comprennent une unité de répondeur téléphonique.

9. Appareil selon l'une quelconque des revendications 1 à 8, comprenant en outre des moyens de commande (5, S19) pour commander les moyens d'auto-émission conformément au fait que les messages audio ont été émis ou non pendant une durée prédéterminée.

10. Appareil selon l'une quelconque des revendications 1 à 9, dans lequel les messages audio de la pluralité de sortes de langues représentent le même contenu.

11. Procédé de communication pour émettre automatiquement un message pré-enregistré (S15) sur une ligne de communication, en réponse à un signal appelant provenant de la ligne de communication, caractérisé en ce qu'il comprend:
une étape de mémorisation (S1 à S7) consistant à enregistrer des messages audio d'une pluralité de sortes de langues; et
une étape d'auto-émission (S14 à S18), en réponse au signal appelant, consistant à émettre séquentiellement les messages audio de la pluralité de sortes de langues enregistrés à l'étape de mémorisation.

12. Procédé selon la revendication 11, comprenant en outre une étape de fixation (S3 à S5) pour fixer l'ordre de la pluralité de sortes de langues,
dans lequel l'étape d'auto-émission émet séquentiellement les messages audio de la pluralité de sortes de langues enregistrés à l'étape de mémorisation, conformément à l'ordre fixé à l'étape de fixation.

13. Procédé selon la revendication 12, comprenant en outre une étape de commande (S17) consistant à commander l'étape d'auto-émission conformément au fait que les messages audio du nombre de langues dont l'ordre a été fixé à l'étape de fixation, ont été émis ou non.

14. Procédé selon l'une quelconque des revendications 11 à 13, dans lequel l'étape d'auto-émission émet de façon répétitive les messages audio de la pluralité de sortes de langues enregistrés à l'étape de mémorisation.

15. Procédé selon l'une quelconque des revendications 11 à 14, dans lequel l'étape d'auto-émission émet les messages audio de la pluralité de sortes de langues enregistrés à l'étape de mémorisation, et après ceci, elle émet un signal de pseudo-tonalité de retour d'appel (S22).

16. Procédé selon l'une quelconque des revendications 11 à 15, comprenant en outre une étape de communication consistant à effectuer une communication après que les messages audio ont été émis à l'étape d'auto-émission.

17. Procédé selon la revendication 16, dans lequel l'étape de communication accomplit une communication de télécopie.

18. Procédé selon l'une quelconque des revendications 16 ou 17, dans lequel l'étape de communication comprend une opération de réponse d'une unité de répondeur téléphonique.

19. Procédé selon l'une quelconque des revendications 11 à 18, comprenant en outre une étape de commande consistant à commander l'étape d'auto-émission conformément au fait que les messages audio ont été émis ou non pendant une durée prédéterminée.

20. Procédé selon l'une quelconque des revendications 11 à 19, dans lequel les messages audio de la pluralité de sortes de langues représentent le même contenu.
